(19) Europäisches Patentamt
European Patent Office
Office européen des brevets

(11) **EP 3 683 886 A1**

(12) **EUROPEAN PATENT APPLICATION**
published in accordance with Art. 153(4) EPC

(43) Date of publication:
**22.07.2020 Bulletin 2020/30**

(51) Int Cl.:
**H01M 10/06** (2006.01)    **H01M 2/18** (2006.01)
**H01M 4/62** (2006.01)    **H01M 10/08** (2006.01)
**H01M 10/12** (2006.01)

(21) Application number: **18874204.3**

(22) Date of filing: **05.10.2018**

(86) International application number:
**PCT/JP2018/037301**

(87) International publication number:
**WO 2019/087682 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2017 JP 2017211361**

(71) Applicant: **GS Yuasa International Ltd.**
**Kyoto-shi, Kyoto 601-8520 (JP)**

(72) Inventors:
• **WADA, Hidetoshi**
**Kyoto-shi**
**Kyoto 601-8520 (JP)**

• **INAGAKI, Satoshi**
**Kyoto-shi**
**Kyoto 601-8520 (JP)**
• **KYO, Masaaki**
**Kyoto-shi**
**Kyoto 601-8520 (JP)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(54) **LEAD STORAGE BATTERY**

(57) A lead-acid battery includes an electrode group in which a plurality of positive electrode plates and a plurality of negative electrode plates are stacked via a separator, a cell chamber storing the electrode group, and an electrolyte solution. The electrolyte solution contains 0.03 to 0.3 mol/L of Na. When two electrode plates, the positive electrode plate or the negative electrode plate (end plate), located at both ends of the electrode group are disposed close to inner walls of a cell chamber, an inter-electrode gap W obtained by $W = (L - d1)/N - d2$ is -0.1 to + 0.15 mm, where a maximum separation distance between the surfaces of both end plates facing the inner walls of the cells is L, a total of thicknesses of the positive electrode plates and the negative electrode plates in the electrode group is d1, the number of inter-electrode gaps in the cell chamber is N, and a total thickness of the separator interposed between the positive electrode plate and the negative electrode plate is d2. The separator has a first rib on the negative electrode plate side.

Fig. 1

EP 3 683 886 A1

**Description**

TECHNICAL FIELD

The present invention relates to a lead-acid battery.

BACKGROUND ART

Lead-acid batteries are being used for various uses in addition to in-vehicle and industrial uses. The lead-acid battery includes a negative electrode plate, a positive electrode plate, a separator interposed between the negative electrode plate and the positive electrode plate, and an electrolyte solution. Generally, a sulfuric acid aqueous solution is used as the electrolyte solution.

Patent Document 1 describes a lead-acid battery containing sodium ions in an electrolyte solution in a range of 0.01 to 0.45 mol/L.

Patent Document 2 describes a lead-acid battery in which an active material layer to which 0.5% by weight to 10% by weight of sodium sulfate relative to a positive active material has been added is disposed near the surface of a positive electrode plate.

PRIOR ART DOCUMENTS

PATENT DOCUMENTS

Patent Document 1: WO 2014/097522 A
Patent Document 2: JP-A-2000-340252

SUMMARY OF THE INVENTION

PROBLEMS TO BE SOLVED BY THE INVENTION

The lead-acid battery is sometimes used in a poor charged state called a partial state of charge (PSOC). For example, the lead-acid battery is used in the PSOC during charge control or idling stop-start (ISS). Therefore, the lead-acid battery is required to be excellent in life performance in a cycle test under PSOC conditions (hereinafter referred to as PSOC life performance).

When the lead-acid battery is used in the PSOC state, stratification of the electrolyte solution progresses, and softening of a positive active material and accumulation (sulfation) of lead sulfate in positive and negative active materials are promoted, to shorten the life.

In addition, when the battery comes into an overdischarged state and a specific gravity of the electrolyte solution decreases to near that of water, the solubility of lead increases, and a permeation short circuit easily occurs. Further, in the overdischarged state, the electrolyte solution resistance increases, and the charge becomes difficult. For the purpose of preventing these, Na has been added to the electrolyte solution, but the addition of Na causes a decrease in charge acceptability in the PSOC state and facilitates the accumulation (sulfation) of lead sulfate in the negative electrode.

MEANS FOR SOLVING THE PROBLEMS

One aspect of the present invention is a lead-acid battery including: an electrode group in which a plurality of positive electrode plates and a plurality of negative electrode plates are stacked via a separator; a cell chamber that stores the electrode group; and an electrolyte solution. The electrolyte solution contains 0.03 to 0.3 mol/L of Na. When a first end plate that is a positive electrode plate of the positive electrode plates or a negative electrode plate of the negative electrode plates located at one end of the electrode group is disposed close to one of inner walls of the cell chamber, the inner walls facing each other, and a second end plate that is a positive electrode plate of the positive electrode plates or a negative electrode plate of the negative electrode plates located at the other end of the electrode group is disposed close to the other of inner walls, an inter-electrode gap W obtained by the following equation is -0.1 to + 0.15 mm: W = {(L - d1)/N} - d2, where an inter-end-plate distance, that is a maximum separation distance between a surface of the first end plate facing the inner wall and a surface of the second end plate facing the inner wall, is L, a total of thicknesses of the positive electrode plates and the negative electrode plates in the electrode group is d1, the number of inter-electrode gaps that is the number of regions in each of which each of the positive electrode plates and each of the negative electrode plates face in the cell chamber is N, and a total thickness of one separator interposed between the positive electrode plate and the negative electrode plate is d2. The separator includes a first rib on the negative electrode plate side.

ADVANTAGES OF THE INVENTION

In the lead-acid battery, the accumulation of lead sulfate is prevented, and excellent PSOC life performance is obtained.

BRIEF DESCRIPTION OF THE DRAWINGS

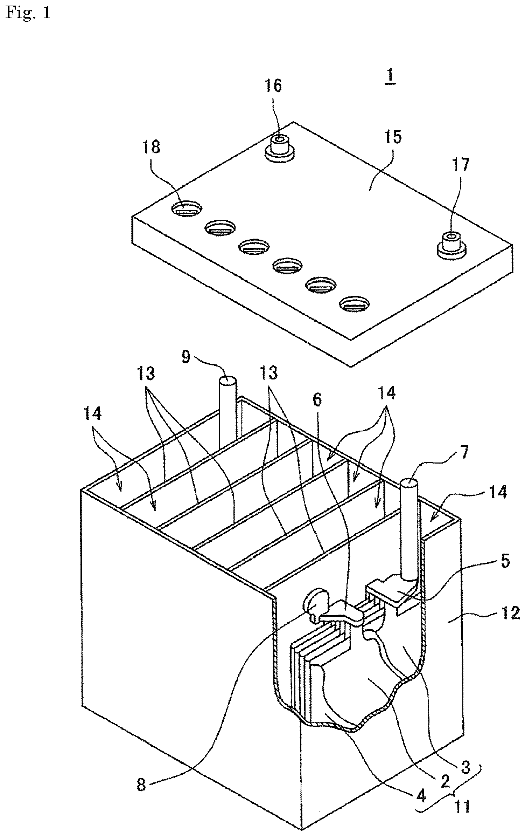

Fig. 1 is an exploded perspective view showing an external appearance and an internal structure of a lead-acid battery, which is partially cut off, according to one aspect of the present invention.

MODES FOR CARRYING OUT THE INVENTION

A lead-acid battery according to one aspect of the present invention includes an electrode group in which a plurality of positive electrode plates and a plurality of negative electrode plates are stacked via a separator, a cell chamber storing the electrode group, and an electrolyte solution. The electrolyte solution contains 0.03 to 0.3 mol/L of Na. When a first end plate that is a positive electrode plate of the positive electrode plates or a negative electrode plate of the negative electrode plates located at one end of the electrode group is disposed close to one of inner walls of the cell chamber, the inner walls facing each other, and a second end plate that is a positive electrode plate of the positive electrode plates or a negative electrode plate of the negative electrode plates located at the other end of the electrode group is disposed close to the other of inner walls, an inter-electrode gap W obtained by the following equation is -0.1 to + 0.15 mm: W = {(L - d1)/N} - d2, where an inter-end-plate distance, that is a maximum separation distance between a surface of the first end plate facing the inner wall and a surface of the second end plate facing the inner wall, is L, a total of thicknesses of the positive electrode plates and the negative electrode plates in the electrode group is d1, the number of inter-electrode gaps that is the number of regions in each of which each of the positive electrode plates and each of the negative electrode plates face in the cell chamber is N, and a total thickness of one separator interposed between the positive electrode plate and the negative electrode plate is d2. The separator has a first rib on the negative electrode plate side.

In the lead-acid battery, during discharge, lead sulfate is generated at both the positive electrode and the negative electrode, and water is generated at the positive electrode. On the other hand, at the time of charge, metallic lead, lead dioxide, and sulfuric acid are generated from lead sulfate and water.

When the lead-acid battery is continuously used in a poor charged state, the accumulated amount of lead sulfate is inevitably increased at the end of the PSOC life, so that the specific gravity of the electrolyte solution is decreased. The decrease in the specific gravity of the electrolyte solution is particularly remarkable during overdischarge. When the electrolyte solution is not sufficiently stirred during charge, a difference in the concentration of sulfuric acid occurs between the upper and lower portions of the electrolyte solution (stratification occurs). The continuous use in such an environment leads to the progression of the sulfation in the lower part where the specific gravity of the electrolyte solution is high.

The addition of Na to the electrolyte solution has an effect of preventing the permeation short circuit and increasing the charge recoverability from the state of being left under overdischarge. On the other hand, it is known that the addition of Na causes the decrease in charge acceptability and facilitates the accumulation (sulfation) of lead sulfate in the negative electrode.

However, the inventors of the present applications have found that the accumulation of lead sulfate is prevented by moderately applying pressure to the electrode group. It is conceivable that this is because the expansion of the negative electrode material (negative active material) is mechanically prevented.

The degree of pressure to the electrode group can be evaluated using an inter-electrode gap W expressed by the following equation:

$$\text{(inter-electrode gap W)} = \{\text{(Inter-end-plate distance L)} - \text{(total of thicknesses d1 of positive and negative electrode plates)}\}/\text{(Number N of inter-electrode gaps)} - \text{(Total thickness d2 of one separator)}$$

Here, the total of thicknesses d1 of the positive and negative electrode plates is the sum of the total thickness of the positive electrode plates obtained by adding the thicknesses of the positive electrode plates constituting the electrode group and the total thickness of the negative electrode plates obtained by adding the thicknesses of the negative electrode plates constituting the electrode group. When the number of the positive electrode plates or the negative electrode plates in the cell chamber exceeds 10, the thickness of the positive electrode plate or the negative electrode plate is obtained by measuring with a vernier caliper the thicknesses at six locations per electrode plate in a chemically converted, fully charged electrode plate (measuring three locations, which are upper, middle, and lower locations equally divided in the height direction, on the right and left sides of the electrode plate), and averaging the measured values of 10 electrode plates. The total thickness of the positive electrode plate or the negative electrode plate is obtained by multiplying the average of the thicknesses of the positive electrode plates or the negative electrode plates obtained above by the number of the positive electrode plates or the negative electrode plates. When the number of the positive electrode plates or the negative electrode plates in the cell chamber is 10 or less, the thickness of each of the positive electrode plates and the negative electrode plates is measured by the above method, and the total thickness is obtained by summing the thicknesses.

The number N of inter-electrode gaps is the number of regions where the positive electrode plate and the negative electrode plate face each other in the cell chamber, and in the case of an electrode group in which positive electrode plates and negative electrode plates are alternately stacked, (Number N of inter-electrode gaps) = (Number of positive electrode plates) + (Number of negative electrode plates) -1.

When ribs are provided on one or both surfaces of the separator, the total thickness d2 of one separator is a value obtained by adding the height of each of the ribs on one or both surfaces to the base thickness of the separator.

The inter-end-plate distance L is represented as the maximum distance between the surface of the first end plate facing the inner wall of the cell chamber and the surface of the second end plate facing the inner wall of the cell chamber, when the positive electrode plate or the negative electrode plate (hereinafter referred to appropriately as "first end plate") located at one end of the electrode group is disposed close to one of inner walls of the cell chamber, the inner walls facing each other, and the positive electrode plate or the negative electrode plate (hereinafter referred to appropriately as "second end plate") located at the other end of the electrode group is disposed close to the other of the inner walls. When the rib for adjusting the position of the electrode group is not provided in the cell chamber, and when both end plates directly contact the inner walls of the cell chamber not through the separator, the inter-end-plate distance L is equal to the distance between both inner walls of the cell chamber (i.e., the inner dimension of the cell chamber).

The rib for adjusting the position of the electrode group may be provided in the cell chamber. In this case, the first end plate and/or the second end plate do not contact the inner walls of the cell chamber, but contact the ribs provided in the cell chamber, and face the inner walls via the ribs provided in the cell chamber. In this case, a value obtained by subtracting the height of the rib provided in the cell chamber from the inner dimension of the cell chamber is the inter-end-plate distance L. When the ribs are provided on both inner walls of the cell chamber, the heights of the two ribs provided on both inner walls are summed up, and the total value is subtracted from the inner dimension of the cell chamber to obtain the inter-end-plate distance L.

Alternatively, there are cases where the rib for adjusting the position of the electrode group is not provided in the cell chamber, but the electrode plates constituting the first end plate and/or the second end plate are stored in a bag-shaped separator. In this case, the end plate faces the inner wall of the cell chamber via the separator. In this case, a value obtained by subtracting the total thickness of the separator (the sum of the rib height of the separator and the thickness of the base) from the inner dimension of the cell chamber is the inter-end-plate distance L. When both the first end plate and the second end plate are stored in the bag-shaped separator, the total thickness of the two separators is subtracted to obtain the inter-end-plate distance L.

Here, the rib height of the separator refers to the maximum height of the rib provided in a region facing the region of the positive electrode plate or the negative electrode plate where the electrode material is present.

When the rib for adjusting the position of the electrode group is provided in the cell chamber, and when the electrode plates constituting the first end plate and/or the second end plate are stored in the bag-shaped separator, the height of the rib provided in the cell chamber and the total thickness of the separator are subtracted from the inner dimension of the cell chamber to obtain the inter-end-plate distance L. However, the rib (outer rib) provided on the outer surface of the bag-shaped separator may or may not contact the rib provided in the cell chamber.

For example, when the electrode group is inserted into the cell chamber, the outer ribs of the bag-shaped separator may be arranged so as to intersect with the ribs provided in the cell chamber. In this case, the rib provided in the cell chamber contacts the outer rib of the bag-shaped separator. In this case, the inter-end-plate distance L is a value obtained by subtracting the height of the rib provided in the cell chamber and the total thickness of the separator (including the heights of the inner rib and the outer rib) from the inner dimension of the cell chamber.

On the other hand, cases are also considered where, when the electrode group is inserted into the cell chamber, the outer ribs of the bag-shaped separator do not intersect with the ribs provided in the cell chamber, and are arranged so as to fit into the gaps between the ribs provided in the cell chamber. In this case, the rib provided in the cell chamber does not contact the outer rib of the bag-shaped separator, but contacts the base surface of the bag-shaped separator. In this case, the inter-end-plate distance L is obtained by subtracting the height of the rib provided in the cell chamber and the base thickness of the separator from the inner dimension of the cell chamber, and by further subtracting the height of the inner rib when the rib (inner rib) is provided on the inner surface of the bag-shaped separator.

That is, the inter-electrode gap W is expressed by W = {(L - d1)/N} - d2 and represents, as a gap per region where the positive electrode plate and the negative electrode plate face each other, the size of the gap in which the positive electrode plate and the negative electrode plate except for the end plates can freely move in the cell chamber when the first end plate and the second end plate located at both ends of the electrode group are disposed as close to both side walls of the cell chamber such that the separation distance of the end plates is maximal. When the inter-electrode gap W is negative, it means that pressure has been applied to the positive and negative electrode plates since the beginning of the manufacturing of the lead-acid battery. Even when the inter-electrode gap W is positive, the electrode plate expands with the use of the battery, and pressure may thus be applied.

By applying pressure to the electrode group, the accumulation of lead sulfate can be prevented. However, on the other hand, by applying pressure to the electrode group, the diffusivity of the electrolyte solution near the negative electrode decreases, and hence the charge-discharge performance tends to decrease. When sufficient space cannot be ensured between the negative electrode plate and the separator due to the pressure, sulfuric acid cannot be sufficiently diffused during discharge, and the specific gravity of the electrolyte solution near the negative electrode easily decrease, thereby facilitating a decrease in discharge performance. Further, during charge, sulfuric acid released from the negative electrode plate is inhibited from diffusing by the separator, and high-concentration sulfuric acid stays near the negative electrode, thereby facilitating a decrease in charge efficiency.

The rib (first rib) provided on the negative electrode plate side ensures a space for holding the electrolyte solution between the negative electrode plate and the separator even under pressure. Thereby, the diffusivity of the electrolyte solution near the negative electrode is maintained even under pressure, and a decrease in charge-discharge performance is prevented. During discharge, a decrease in the specific gravity of the electrolyte solution near the negative electrode is prevented, and the decrease in discharge performance is prevented. During charge, sulfuric acid released from the negative electrode plate can be diffused into the space between the negative electrode plate and the separator, and the specific gravity of the electrolyte solution near the negative electrode decreases, thereby improving the charge efficiency.

Further, the first rib provided on the negative electrode plate side enhances the diffusivity of the electrolyte solution, so that the accumulation of lead sulfate is prevented synergistically. As a result, a lead-acid battery having excellent PSOC life performance can be achieved.

With an increase in Na content (concentration) in the electrolyte solution, lead sulfate is more easily accumulated. However, by providing the first rib and moderately pressing the electrode group, it is possible to prevent the accumulation of lead sulfate. When the Na content is 0.3 mol/L or less, the accumulated amount of lead sulfate can be kept low, and the decrease in discharge performance can be prevented. On the other hand, from the viewpoint of ensuring the charge recoverability from the overdischarged state and the resistance to permeation short circuit, the Na content is preferably 0.02 mol/L or more, and more preferably 0.03 mol/L or more. According to one aspect of the present invention, the provision of the first rib can prevent the permeation short circuit even when the Na content is as low as about 0.02 mol/L. Therefore, from the viewpoint of preventing the accumulation and permeation short circuit of lead sulfate, and from the viewpoint of obtaining excellent PSOC life performance, the Na content in the electrolyte solution is preferably 0.02 to 0.3 mol/L, and more preferably 0.03 to 0.3 mol/L.

Further, in addition to Na, the electrolyte solution may contain Al, Li or other alkali metal ions, or alkaline earth metal ions. The sulfate compound of these metal ions has a higher solubility than lead sulfate, and with the presence of these metal ions in the electrolyte solution, lead ions are hardly dissolved. Hence an effect of preventing the permeation short circuit is obtained.

Note that the content of Na or other metal ions in the electrolyte solution can be obtained by disassembling a chemically converted, fully charged lead-acid battery, extracting an electrolyte solution, and performing inductively coupled plasma (ICP) emission spectroscopy. More specifically, atomic absorption measurement is performed using an ICP emission spectrometer (ICPS-8000, manufactured by Shimadzu Corporation), and the concentration of metal ions is obtained from a calibration curve.

The inter-electrode gap W is preferably -0.1 to +0.15 mm. By setting the inter-electrode gap W to 0.15 mm or less, an effect of preventing the accumulation of lead sulfate due to pressure can be obtained. On the other hand, as the inter-electrode gap W is decreased and the pressure is increased, the discharge characteristics deteriorate. Further, the insertion of the electrode group into the cell chamber becomes difficult. From the viewpoint of maintaining the discharge characteristics and facilitating the insertion of the electrode group into the cell chamber, the inter-electrode gap W is preferably -0.1 mm or more.

According to one embodiment of the present invention, the electrolyte solution contains 0.03 to 0.3 mol/L of Na, the inter-electrode gap W is -0.1 to +0.15 mm, and the first rib is provided on the negative electrode plate side, whereby the accumulation of lead sulfate is remarkably prevented, and a lead-acid battery having excellent charge-discharge characteristics can be achieved.

The separator includes a first rib provided on the negative electrode plate side. The first rib prevents the separator from closely contacting the negative electrode plate. The first ribs improve the diffusivity of the electrolyte solution near the negative electrode plate, thus preventing the decrease in the specific gravity of the electrolyte solution near the negative electrode plate during discharge. Moreover, during charge, an increase in the specific gravity of the electrolyte solution near the negative electrode plate is prevented. Thereby, the charge efficiency is improved. Along with the effect of pressing the electrode group, the accumulation of lead sulfate is synergistically prevented, and the PSOC life performance is improved.

The separator may further include a second rib provided on the positive electrode plate side. The second rib prevents the separator from closely contacting the positive electrode plate. The second rib improves the diffusivity of the electrolyte solution near the positive electrode plate and can prevent the oxidation degradation of the separator, thus further improving the PSOC life performance.

The separator may have a bag shape. When a bag-shaped separator is used, the electrolyte solution is likely to stay. However, by providing the first rib and the second rib, the diffusivity of the electrolyte solution in the separator increases, and the PSOC life performance can be further improved. At the positive electrode, water is generated during discharge, and hence the specific gravity of the electrolyte solution changes more than near the negative electrode plate. However, when the bag-shaped separator stores the positive electrode plate, the diffusivity of the electrolyte solution near the positive electrode plate is enhanced, and the stratification of the electrolyte solution is easily prevented. Meanwhile, when the bag-shaped separator stores the negative electrode plate, a short circuit due to extension of a positive electrode grid is easily prevented. Further, the formation of the first rib in the bag increases the diffusivity of the electrolyte solution near the negative electrode plate to easily prevent the stratification.

Further, the negative electrode plate preferably includes a negative electrode material, and the negative electrode material may contain conductive carbon particles. The addition of carbon in the electrode material has the effect of preventing the accumulation of lead sulfate and improving the PSOC life performance. On the other hand, when the carbon particles include the first carbon particles having a particle size of less than 32 $\mu$m, and the first carbon particles include the second carbon particles having a particle size smaller than the average pore size of the separator, there is a possibility that the carbon particles having flowed out into the electrolyte solution blocks the pores of the separator, resulting in the decrease in battery performance (e.g., low-temperature high rate performance). However, since the first ribs are provided on the negative electrode plate side, the pores of the separator are hardly blocked by the carbon particles, and the decrease in performance can be prevented. The content of the first carbon particles in the negative electrode material is preferably 0.2% by mass or more and 2% by mass or less.

The lead-acid battery may include a fiber mat interposed between the positive electrode plate and the negative electrode plate. When the fiber mat is provided, the electrode plate is pressed by the fiber mat to decrease the amount of electrolyte solution around the electrode plate and also decrease the diffusivity. However, by providing the first rib at least on the negative electrode plate side of the separator, even when the fiber mat is provided, the electrolyte solution can be held near the negative electrode plate and the diffusivity of the electrolyte solution can be improved.

In the present specification, the fully charged state of the lead-acid battery is a state where, in the case of a flooded-type battery, in a water bath at 25°C, constant current charge is performed at a current of 0.2 CA to reach 2.5 V/cell, and then the constant current charge is further performed at 0.2 CA for two hours. In the case of a valve regulated battery, the fully charged state is a state where a constant current constant voltage charge of 2.23 V/cell is performed at 0.2 CA in an air tank at 25°C, and the charge is ended at the point when the charge current at the time of constant voltage charge becomes 1 mCA or lower.

In the present specification, 1 CA is a current value (A) having the same numerical value as the nominal capacity (Ah) of the battery. For example, when the battery has a nominal capacity of 30 Ah, 1 CA is 30 A, and 1 mCA is 30 mA.

Hereinafter, the lead-acid battery according to the embodiment of the present invention will be described for each of the main components, but the present invention is not limited to the following embodiment.

(Separator)

The separator includes a base made of a microporous film and a rib protruding from one main surface of the base. More preferably, a rib protruding from the other main surface of the base may be further provided. The rib protruding from one main surface of the base is disposed so as to be located on the negative electrode plate side. The rib located on the negative electrode plate side is called a first rib. The rib protruding from the other main surface of the base is disposed on the positive electrode plate side (i.e., so as to face the positive electrode plate). The rib located on the positive electrode plate side is called a second rib. The first rib can enhance the diffusivity of the electrolyte solution near the negative electrode plate, so that the PSOC life performance can be further improved and the permeation short circuit can be prevented.

The separator is formed using a polymer material (but different from fibers). At least the base is a porous sheet and can also be called a porous film. The average pore size of the base may be regarded as the average pore size of the separator. The separator may include a filler (e.g., a particulate filler such as silica, and/or a fibrous filler) that is dispersed in a matrix formed using a polymer material. The separator is preferably made of a polymer material having acid resistance. As such a polymer material, a polyolefin such as polyethylene or polypropylene is preferred.

The average pore size of the base of the separator is, for example, 0.01 $\mu$m or more and 0.5 $\mu$m or less, and preferably 0.03 $\mu$m or more and 0.3 $\mu$m or less. When the average pore size is in such a range, both low electric resistance and excellent short-circuit resistance can be achieved, which is advantageous.

The average pore size of the separator can be obtained by mercury porosimetry. More specifically, the separator is put into a measurement container, which is evacuated and then filled with mercury by applying pressure. A pore distribution is obtained from the relationship between the pressure at this time and the volume of mercury pushed into the separator, and from this pore distribution, the average pore size is obtained. For measurement of the average pore size, an automatic porosimeter (Autopore IV9505) manufactured by Shimadzu Corporation is used.

The average thickness of the base is, for example, 100 $\mu$m or more and 300 $\mu$m or less, and preferably 150 $\mu$m or more and 250 $\mu$m or less. When the average thickness of the base is in such a range, the height of the first rib, as well as the height of the second rib if necessary, can be easily ensured while the capacity is kept high.

The average thickness of the base is obtained by measuring the thickness of the base at five freely selected locations in a cross-sectional photograph of the separator and averaging the measured thickness.

The first rib is formed on the surface of the separator facing the negative electrode plate. The height of the first rib is, for example, 0.05 mm or more, and preferably 0.07 mm or more. When the height of the first rib is in such a range, the electrolyte solution is more easily diffused. From the viewpoint of ensuring high capacity, the height of the first rib is, for example, 0.40 mm or less, and preferably 0.20 mm or less. Any combination of these lower and upper limits is possible.

Unless otherwise specified, the height of the first rib refers to the maximum height of the first rib present in a region of the negative electrode plate facing to the region where the negative electrode material is present. The height of each first rib is the distance from one main surface of the base to the top of the first rib. In a case where the main surface of the base is not flat, when the separator is placed flat with the first rib side facing up, the distance from the highest position of one main surface of the base to the highest position of the top of the first rib at a predetermined position of the first rib is defined as the height of the first rib.

The pattern of the first rib on one main surface of the base is not particularly limited, and the first rib may be formed at random or may be formed in a stripe shape, a curved shape, a grid shape, or the like. From the viewpoint of making the electrolyte solution more easily diffused, it is preferable to form a plurality of first ribs on one main surface of the base so as to be arranged in stripes. The orientation of the stripe-shaped first ribs is not particularly limited, and for example, the plurality of first ribs may be formed along the height direction or the width direction of the negative electrode plate. A difference is likely to be produced in specific gravity of the electrolyte solution between the upper and lower portions of the electrode plate, it is thus preferable to form the plurality of first ribs in a stripe shape along the height direction of the negative electrode plate from the viewpoint of further increasing the diffusivity of the electrolyte solution.

Note that a lug for extracting current from the electrode group is usually formed at one end of each of the negative electrode plate and the positive electrode plate. The vertical direction of the negative electrode plate or the positive electrode plate with the lug directed upward is referred to as the height direction of the negative electrode plate or the positive electrode plate. The width direction of the negative electrode plate or the positive electrode plate is a direction orthogonal to the height direction and crossing the main surface of the negative electrode plate or the positive electrode plate.

The pitch of the stripe-shaped or grid-shaped first ribs is, for example, 0.3 mm or more and 10 mm or less, and preferably 0.5 mm or more and 5 mm or less. When the separator includes a region in which the first ribs are formed at a pitch in such a range, an effect of improving the diffusivity of the electrolyte solution near the negative electrode plate is easily obtained. In the separator, the first ribs are preferably formed at such a pitch in a region facing the negative electrode plate. For example, the first ribs having such a pitch are preferably formed in 70% or more of the area of the region facing the negative electrode plate. In a region not facing the negative electrode plate, such as the end of the separator, the first rib may or may not be formed, and a plurality of first ribs may be formed densely (e.g., at an average pitch of 0.5 mm or more and 5 mm or less).

Note that the pitch of the first ribs is the distance between the tops of the adjacent first ribs (more specifically, the distance between the centers of the adjacent first ribs in a direction crossing the first ribs).

The average pitch of the first ribs is obtained by averaging the pitches of the first ribs measured at ten freely selected locations. When the first ribs are densely formed in a region not facing the negative electrode plate, the average pitch may be calculated excluding this region. The average pitch of the first ribs in the region not facing the negative electrode plate can be calculated for this region similarly to the above.

The second rib is formed on the surface of the separator facing the positive electrode plate. The height of the second rib is, for example, 0.3 mm or more, and preferably 0.4 mm or more. When the height of the second rib is in such a range, the oxidation degradation of the separator is easily prevented. From the viewpoint of ensuring high capacity, the height of the second rib is, for example, 1.0 mm or less, and may be 0.7 mm or less. Any combination of these lower and upper limits is possible.

Unless otherwise specified, the height of the second rib refers to the maximum height of the second rib present in a region of the positive electrode plate facing to the region where the positive electrode material is present. The maximum height of the second rib is obtained in accordance with the case of the first rib. The height of each second rib is the distance from one main surface of the base to the top of the second rib.

The pattern and the orientation of the second rib are not particularly limited and may be selected, for example, from those described for the first rib. The pitch of the stripe-shaped or grid-shaped second rib is, for example, 1 mm or more and 15 mm or less, and preferably 5 mm or more and 10 mm or less. When the separator includes a region in which the second ribs are formed at a pitch in such a range, an effect of preventing the oxidation degradation of the separator is further enhanced. In the separator, the second ribs are preferably formed at such a pitch in a region facing the positive electrode plate. For example, the second ribs having such a pitch are preferably formed in 70% or more of the area of the region facing the positive electrode plate. In a region not facing the positive electrode plate, such as the end of the separator, the second rib may or may not be formed, and a plurality of second ribs may be formed densely (e.g., at an average pitch of 0.5 mm or more and 5 mm or less).

Note that the pitch of the second ribs is the distance between the tops of the adjacent second ribs (more specifically, the distance between the centers of the adjacent second ribs in a direction crossing the second rib). The average pitch of the second ribs can be calculated according to the average pitch of the first ribs.

The sheet-shaped separator may be sandwiched between the negative electrode plate and the positive electrode plate, or the separator may be interposed between the negative electrode plate and the positive electrode plate by storing the negative electrode plate or the positive electrode plate in the bag-like separator. When a bag-shaped separator is used, the electrolyte solution is hardly diffused, but the provision of the first rib and the second rib improves the diffusivity. When the negative electrode plate is stored in the bag-shaped separator, the first ribs can easily enhance the diffusivity of the electrolyte solution near the negative electrode plate and can prevent a short circuit caused by separator breakage even when the positive electrode current collector extends. When the positive electrode plate is stored in the bag-shaped separator, the stratification of the electrolyte solution is easily prevented.

The separator is obtained by, for example, extruding a resin composition containing a pore-forming additive (a solid pore-forming additive such as a polymer powder, and/or a liquid pore-forming additive such as an oil), a polymer material, and the like to be molded into a sheet shape, and then removing the pore-forming additive to form pores in the matrix of the polymer material. The rib may be formed, for example, at the time of the extrusion molding, or may be formed by performing the press with a roller having a groove corresponding to the rib after the molding into the sheet shape or the removal of the pore-forming additive. When a filler is used, the filler is preferably added to the resin composition.

(Electrolyte solution)

The electrolyte solution contains sulfuric acid in the aqueous solution. The electrolyte solution may be gelled if necessary. The electrolyte solution may contain an additive used for a lead-acid battery, if necessary.

In the present embodiment, the electrolyte solution contains Na at a concentration of 0.03 to 0.3 mol/L.

The specific gravity at 20°C of the electrolyte solution in a fully charged lead-acid battery after chemical conversion is, for example, 1.10 $g/cm^3$ or more and 1.35 $g/cm^3$ or less.

(Positive electrode plate)

There are a paste type and a clad type in the positive electrode plate of the lead-acid battery.

The paste-type positive electrode plate includes a positive electrode current collector and a positive electrode material. The positive electrode material is held in the positive electrode current collector. In the paste-type positive electrode plate, the positive electrode material is a material with the positive electrode current collector removed from the positive electrode plate. The positive electrode current collector may be formed similarly to the negative electrode current collector, and can be formed by casting lead or a lead alloy or processing a lead or lead alloy sheet.

The clad-type positive electrode plate includes a plurality of porous tubes, a spine inserted into each tube, a positive electrode material with which a spine inserted tube is filled, and a joint that joins the plurality of tubes. In the clad-type positive electrode plate, the positive electrode material is a material with the tube, the spine, and the joint removed from the positive electrode plate.

As a lead alloy used for the positive electrode current collector, a Pb-Ca-based alloy and a Pb-Ca-Sn-based alloy are preferred in terms of corrosion resistance and mechanical strength. The positive electrode current collector may have a lead alloy layer with a different composition, and a plurality of alloy layers may be provided. It is preferable to use a Pb-Ca-based alloy or a Pb-Sb-based alloy for the spine.

The positive electrode material contains a positive active material (lead dioxide or lead sulfate) that develops a capacity through an oxidation-reduction reaction. The positive electrode material may contain other additives if necessary.

A non-chemically converted paste-type positive electrode plate is obtained in such a manner that a positive electrode current collector is filled with a positive electrode paste, which is then cured and dried, according to the case of the negative electrode plate. Thereafter, a non-chemically converted positive electrode plate is chemically converted. The positive electrode paste is prepared by kneading lead powder, an additive, water, and sulfuric acid.

A non-chemically converted clad-type positive electrode plate is formed by mixing an additive and lead powder or slurry-like lead powder in a spine inserted tube, filling the mixture, and joining a plurality of tubes with a joint.

(Negative electrode plate)

The negative electrode plate of the lead-acid battery includes a negative electrode material. Normally, the negative electrode plate of the lead-acid battery is made up of a negative electrode current collector and a negative electrode material. The negative electrode material is a material obtained with the negative electrode current collector removed from the negative electrode plate. The negative electrode current collector may be formed by casting lead (Pb) or a lead alloy or may be formed by processing a lead or lead alloy sheet. Examples of the processing method include an expanding process and a punching process. The use of a negative electrode grid as the negative electrode current collector is preferred because the negative electrode material is easily supported.

The lead alloy used for the negative electrode current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative electrode material contains a negative active material (lead or lead sulfate) that develops a capacity through an oxidation-reduction reaction. The negative electrode material may contain an expander, a carbonaceous material such as carbon black, barium sulfate, or the like, and may contain other additives.

The negative active material in a charged state is spongy lead, whereas a non-chemically converted negative electrode plate is usually produced using lead powder.

The negative electrode material can include carbon particles as an additive. The carbon particles normally have conductivity. Examples of the carbon particles include carbon black, graphite, hard carbon, and soft carbon. Examples of the carbon black include acetylene black, furnace black, channel black, and lamp black. As graphite, any carbon material including a graphite type crystal structure may be used, and any of artificial graphite and natural graphite may be used. The negative electrode material may contain one kind of these carbon particles, or may contain two or more kinds thereof.

It is preferable that the carbon particles include first carbon particles having a particle size of less than 32 $\mu$m, and the first carbon particles include second carbon particles having a particle size smaller than the average pore size of the separator. The carbon particles contained in the negative electrode material only need to include at least the first carbon particles, and may contain only the first carbon particles. The carbon particles may include the first carbon particles and carbon particles (third carbon particles) having a particle size of 32 $\mu$m or more.

The second carbon particles preferably include carbon black. The second carbon particles such as carbon black easily flow out into the electrolyte solution, but even when the second carbon particles flow out into the electrolyte solution, the action of the first rib can prevent the pores of the separator from being blocked by the second carbon particles. With the first carbon particles including the second carbon particles such as carbon black, a more uniform conductive network is easily formed in the negative electrode material.

The content of the carbon particles contained in the negative electrode material is, for example, 0.2% by mass or more 3.0% by mass or less, and preferably 0.3% by mass or more 2.5% by mass or less. When the content of the carbon particles is in such a range, the conductive network is likely to spread while ensuring a high capacity.

The ratio of the first carbon particles to the carbon particles contained in the negative electrode material (total amount of carbon particles) is, for example, 10% by mass or more, and preferably 30% by mass or more. The ratio of the first carbon particles to the carbon particles contained in the negative electrode material (total amount of carbon particles) is 100% by mass or less, and may be 90% by mass or less. These lower and upper limits can be combined in a freely selectable manner.

The content of the first carbon particles in the negative electrode material is preferably, for example, 0.2% by mass or more and 2% by mass or less. By using the negative electrode plate including the negative electrode material with such a content of the first carbon particle and the separator including the first ribs in combination, the diffusivity of the electrolyte solution near the negative electrode plate is increased, and high PSOC life performance can be ensured. When the content of the first carbon particles in the negative electrode material is 0.2% by mass or more, the second carbon particles included in the first carbon particles easily flow out into the electrolyte solution during charge and discharge. However, due to the presence of the first rib, the pores of the separator are prevented from being blocked by the first carbon particles having flowed out. Thereby, the decrease in battery performance, for example, a decrease in low-temperature high rate performance, can be prevented. Further, by setting the content of the first carbon particles in the negative electrode material to 2% by mass or less, it is possible to prevent the negative electrode paste from being hardened and to prevent decreases in properties of application to the current collector and properties of filling the current collector. Further, even in a condition where a permeation short circuit easily occurs due to a prolonged life, the stratification is decreased due to the high diffusivity of the electrolyte solution, so that the occurrence of the permeation short circuit can be prevented. From the viewpoint that the effect of preventing the decrease in low-temperature high rate performance by the first rib is remarkably exhibited, the content of the first carbon particles in the negative electrode material is preferably 0.3% by mass or more and 2% by mass or less. From the viewpoint of holding low the decreased amount of liquid during charge, the content of the first carbon particles in the negative electrode material is preferably set to 1% by mass or less (e.g., 0.2% by mass or more and 1% by mass or less, or 0.3% by mass or more and 1% by mass or less).

An average particle size a1 of the second carbon particles included in the first carbon particles (e.g., carbon black or the like) is preferably 100 nm or less, more preferably 60 nm or less. Although there is no particular lower limit, the average particle size a1 is preferably 10 nm or more, and may be 20 nm or more. These upper and lower limits can be combined in a freely selectable manner. When the average particle size of the first carbon particles is in such a range, the first carbon particles easily flow out into the electrolyte solution and easily block the pores of the separator. However, the use of the separator provided with the first rib can prevent blockage of the pores of the separator and prevent the decrease in low-temperature high rate performance.

The third carbon particles preferably include carbon particles other than carbon black among the above-described carbon particles, and particularly preferably include graphite.

A ratio R (= a1/a2) of the average particle size (a1) of the second carbon particles to the average pore size (a2) of the separator is preferably 0.8 or less, and more preferably 0.5 or less. When the ratio R is in such a range, the second carbon particles are likely to block the pores of the separator, but the first rib of the separator can ensure the diffusivity of the electrolyte solution near the negative electrode plate and prevent the blockage of the pores of the separator. Accordingly, high PSOC life performance can be ensured, and the decrease in low-temperature high rate performance can be further prevented.

The content of the carbon particles and the first carbon particles contained in the negative electrode material, the average particle size of the second carbon particles, and the ratio of the second carbon particles can be obtained as follows.

A chemically converted lead-acid battery after full charge is disassembled, and a negative electrode plate is washed with water and dried to remove sulfuric acid, and then dried under vacuum (under pressure lower than atmospheric pressure). Next, an electrode material is collected from the negative electrode plate and crushed. 30 mL of a nitric acid aqueous solution with a concentration of 60% by mass is added to 5 g of the crushed sample, and heated at 70°C to dissolve lead as lead nitrate. To this mixture, 10 g of disodium ethylenediaminetetraacetate, 30 mL of aqueous ammonia with a concentration of 28% by mass, and 100 mL of water are further added, and heating is continued to dissolve soluble matter. Next, a sample collected by filtration is sieved through a sieve having an opening of 500 $\mu$m to remove components having a large size such as a reinforcing material, and the components that have passed through the sieve are collected as carbon particles.

At the time of wet sieving of the collected carbon particles with a sieve having an opening of 32 $\mu$m, when there are particles remaining on the sieve without passing through the sieve, these are defined as third carbon particles, and the particles passing through the sieve are defined as first carbon particles. Note that Japanese Industrial Standards (JIS) Z8815: 1994 can be referred to for wet sieving.

Specifically, the carbon particles are placed on a sieve having a mesh size of 32 $\mu$m and sieved by gently shaking the sieve for 5 minutes while sprinkling ion-exchange water. The ion-exchange water is poured onto the third carbon particles remaining on the sieve to collect the particles from the sieve, and the particles are separated from the ion-exchange water by filtration. The first carbon particles that have passed through the sieve are collected by filtration using a nitrocellulose membrane filter (opening: 0.1 $\mu$m). The collected first and third carbon particles are each dried at a temperature of 110°C for two hours. As a sieve having an opening of 32 $\mu$m, a sieve provided with a sieve mesh having a nominal opening of 32 $\mu$m, as specified in JIS Z 8801-1: 2006, is used.

The first carbon particles that have passed through the sieve include many second carbon particles having small primary particle sizes. The average particle size of such primary particles corresponds to the average particle size a1 of the second carbon particles, as described later. Since such second carbon particles included in the first carbon particles have a particle size smaller than the average pore size a2 of the separator, the second carbon particles flow out into the electrolyte solution and cause the pores of the separator to be blocked.

The content of the first carbon particles in the negative electrode material is obtained by measuring the mass of the first carbon particles separated by the above procedure, and calculating the ratio (% by mass) of the mass in 5 g of the crushed sample. The content (% by mass) of the carbon particles in the negative electrode material is obtained by adding the ratio of the third carbon particles and the ratio of the first carbon particles obtained in accordance with the case of the first carbon particles.

The average particle size a1 of the second carbon particles is obtained by, from an electron micrograph of the first carbon particles, randomly selecting 100 primary particles having a primary particle size smaller than the average pore size d2 of the separator, measuring the maximum size of each primary particle (long axis size), and calculating the average value.

The ratio of the second carbon particles included in the first carbon particles can be obtained as follows from a scanning electron microscope (SEM) photograph of the first carbon particles separated above. First, in the SEM photograph, an arbitrary region of 100 $\mu$m in length $\times$ 100 $\mu$m in width is selected. For carbon particles contained in this region and having a clear outer edge of the particles, particles having a primary particle size smaller than the average pore size a2 of the separator are defined as second carbon particles, and particles having a primary particle size of the average pore size a2 or more are defined as the first carbon particles except for the second carbon particles. Then, for each carbon particle, the area of the region surrounded by the outer edge of the particle is calculated, and the volume of the particle is converted from this area and the primary particle size of the particle. Then, the total volume of the second carbon particles and the total volume of the first carbon particles except for the second carbon particles are obtained, and with respect to the total of both total volumes, the ratio (volume%) of the total volume of the second carbon particles is calculated.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to the lead powder, the organic expander, and various additives if necessary, and mixing these. In the curing step, it is preferable to cure the non-chemically converted negative electrode plate at a temperature higher than room temperature and with high humidity.

The chemical conversion can be performed by charging the electrode group in a state where the electrode group including the non-chemically converted negative electrode plate is immersed in the electrolyte solution containing sulfuric acid in the container of the lead-acid battery. However, the chemical conversion may be performed before the lead-acid battery or the electrode group is assembled. The chemical conversion produces spongy lead.

(Fiber mat)

The lead-acid battery may further include a fiber mat interposed between the positive electrode plate and the negative electrode plate. When the fiber mat is disposed, the electrode plate is pressed by the fiber mat, and it becomes difficult to hold the electrolyte solution around the electrode plate. In the above aspect of the present invention, the first rib is provided on the separator, so that the electrolyte solution can be easily ensured near the negative electrode plate, and high diffusivity of the electrolyte solution can be ensured.

The fiber mat is different from the separator and is made of a sheet-shaped fiber aggregate. As such a fiber aggregate, a sheet in which fibers insoluble in the electrolyte solution are entangled is used. Such sheets include, for example, nonwoven fabrics, woven fabrics, knits, and the like.

As the fibers, it is possible to use glass fibers, polymer fibers (polyolefin fibers, acrylic fibers, polyester fibers such as polyethylene terephthalate fibers, etc.), pulp fibers, and the like. Among the polymer fibers, polyolefin fibers are preferred.

The fiber mat may contain components in addition to the fibers, such as an acid-resistant inorganic powder and a polymer as a binder. As the inorganic powder, it is possible to use silica powder, glass powder, diatomaceous earth, and the like. However, the fiber mat is mainly composed of the fibers. For example, 60% by mass or more of the fiber mat is formed using the fibers.

The fiber mat may be disposed between the negative electrode plate and the positive electrode plate. With the separator being also disposed between the negative electrode plate and the positive electrode plate, the fiber mat may be provided between the negative electrode plate and the positive electrode plate, for example, between the negative electrode plate and the separator, and/or between the separator and the positive electrode plate. From the viewpoint of preventing the stratification of the electrolyte solution, the fiber mat is preferably disposed so as to be in contact with the negative electrode plate. In addition, from the viewpoint of preventing the softening and falling of the positive electrode material, it is preferable to dispose the fiber mat so as to be in contact with the positive electrode plate. From the viewpoint of enhancing an effect of preventing the softening and falling, it is preferable to dispose the fiber mat in the state of being pressed against the positive electrode plate, but in this case, the electrolyte solution near the negative electrode plate is likely to be insufficient. In the present embodiment, since the first ribs are provided on the surface of the separator facing the negative electrode plate, even when the fiber mat is disposed on the positive electrode plate side, the electrolyte solution can be ensured near the negative electrode plate.

Fig. 1 shows an external view of an example of a lead-acid battery according to an embodiment of the present invention.

A lead-acid battery 1 includes a container 12 storing an electrode group 11 and an electrolyte solution (not shown). The inside of the container 12 is partitioned into a plurality of cell chambers 14 by partitions 13. In each cell chamber 14, one electrode group 11 is stored. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging gas generated in the cell chamber 14 to the outside of the battery.

The electrode group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, the negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode groups 11 of the adjacent cell chambers 14 in series.

[Example]

Hereinafter, the present invention will be specifically described based on examples and comparative examples, but the present invention is not limited to the following examples.

<<Lead-acid battery A1>>

(1) Preparation of negative electrode plate

A negative electrode paste was obtained by mixing lead powder, water, diluted sulfuric acid, carbon black, and an organic expander. A mesh of an expanded grid made of a Pb-Ca-Sn-based alloy as a negative electrode current collector was filled with the negative electrode paste, which was then cured and dried to obtain a non-chemically converted negative electrode plate. Sodium lignin sulfonate was used as the organic expander. The additive amounts of the carbon black and the organic expander were adjusted so that the contents thereof contained in 100% by mass of the negative electrode material were 0.3% by mass and 0.2% by mass, respectively. The carbon black and the organic expander were then mixed into the negative electrode paste.

(2) Preparation of positive electrode plate

A positive electrode paste was prepared by mixing lead powder, water, and sulfuric acid. A mesh of an expanded grid made of a Pb-Ca-Sn-based alloy as a positive electrode current collector was filled with the positive electrode paste, which was then cured and dried to obtain a non-chemically converted positive electrode plate.

(3) Preparation of lead-acid battery

Each non-chemically converted negative electrode plate was stored into a bag-shaped separator formed using a polyethylene microporous film, and an electrode group was formed using seven non-chemically converted negative electrode plates and six non-chemically converted positive electrode plates per cell. The separator had a plurality of stripe-shaped second ribs on the outside of the bag. As the separator, a separator provided with the first rib inside the bag was used. The plurality of second ribs were each formed along the height direction of the positive electrode plate, the height of the second ribs was 0.4 mm, and the pitch of the second ribs in a region facing the positive electrode plate was 10 mm. The average thickness of the base of the separator was 200 $\mu$m. The average pore size of the separator was 0.1 $\mu$m.

The electrode group was inserted into a container made of polypropylene, the container was filled with an electrolyte solution, and chemical conversion was performed in the container, to assemble a flooded-type lead-acid battery A1 having a nominal voltage of 2 V and a nominal capacity of 30 Ah (five-hour rate). As the electrolyte solution, an aqueous solution containing sulfuric acid and having a specific gravity of 1.28 at 20°C was used. The inter-electrode gap W was obtained to be 0.2 mm.

For the chemically converted lead-acid battery after full charge, the average particle size a1 of the second carbon particles (carbon black) contained in the negative electrode material and the average pore size a2 of the separator were obtained by the procedure described above, to be 50 nm and 0.1 $\mu$m, respectively, and the ratio R = a1/a2 was 0.5. The content of the first carbon particles was almost the same as the additive amount of the carbon black at the time of preparing the negative electrode material. Also, the average pore size of the separator was almost the same as the average pore size of the separator before the assembly of the battery.

<<Lead-acid batteries A2 to A26>>

As the electrolyte solution, sodium sulfate ($Na_2SO_4$) was added to the aqueous solution containing sulfuric acid to produce five types of lead-acid batteries with differing Na contents of 0.02 mol/L, 0.03 mol/L, 0.1 mol/L, 0.3 mol/L, and 0.35 mol/L, respectively.

Also, at the time of inserting the electrode group into the container, the height of the rib provided in the container was adjusted to produce five types of lead-acid batteries with different inter-electrode gaps W of 0.2 mm, 0.15 mm, 0.1 mm, 0 mm, and -0.1 mm, respectively.

Except for this, similarly to the lead-acid battery A1, 25 types of lead-acid batteries A2 to A26 having different combinations of the inter-electrode gap W and the Na content in the electrolyte solution were produced. Table 1 shows the inter-electrode gap W of the lead-acid batteries A1 to A26 and the Na content in the electrolyte solution.

<<Lead-acid battery B1>>

As the separator, a separator having the first rib inside the bag was used. The separator has a plurality of stripe-shaped first ribs inside the bag, the plurality of first ribs were respectively formed along the height direction of the negative electrode plate, the height of the first ribs was 0.1 mm, and the pitch of the first ribs in a region facing the negative electrode plate was 1 mm. The height and pitch of the second ribs and the average thickness of the base of the separator were the same as those of the lead-acid battery A1.

A lead-acid battery B1 was assembled similarly to the lead-acid battery A1, except that a separator provided with ribs on both the positive electrode plate side and the negative electrode plate side was used.

<<Lead-acid batteries B2 to B26>>

In the same manner as the lead-acid batteries A2 to A26, with respect to the lead-acid battery B 1, 25 types of lead-acid batteries A2 to A26 having different combinations of the inter-electrode gap W and the Na content in the electrolyte solution were produced to produce lead-acid batteries B2 to B26. Table 2 shows the inter-electrode gap W and the Na content in the electrolyte solution for each of the lead-acid batteries B1 to B26.

[Evaluation 1: Accumulated amount of lead sulfate]

The lead-acid battery was charged and discharged under the idling stop condition in accordance with SBA S 0101: 2014. Specifically, (a) to (c) below were repeated as one cycle at 25°C until the discharge end voltage became 1.2 V or less per cell, and the number of cycles at this time was obtained. At the time of charge and discharge, the operation was suspended for 40 to 48 hours every 3600 cycles.

(a) Discharge 1: discharge is performed at a current value of 32 A for 59 seconds.
(b) Discharge 2: discharge is performed at a current value of 300 A for one second.
(c) Charge: charge is performed at a limited current of 100 A and a voltage of 2.33 V per cell for 60 seconds.

An arbitrary negative electrode plate excluding the end plate was taken out of the lead-acid battery after the charge-discharge test, washed with water and dried, and then all electrode materials were collected and crushed. The sulfur content in the crushed sample was measured using a sulfur analyzer to obtain the accumulated amount of lead sulfate. The accumulated amount of lead sulfate was divided by the number of PSOC life cycles to obtain the accumulated amount of lead sulfate per cycle.

The accumulated amount of lead sulfate per cycle was expressed by a relative ratio with the accumulated amount of lead sulfate of the lead-acid battery A1 being 100, and evaluated. Tables 1 and 2 show the evaluation results.

[Evaluation 2: Discharge performance]

A reserve capacity (RC) for discharge was measured according to JIS D 5301. The measured discharge capacity was expressed as a relative ratio with the discharge capacity of the lead-acid battery A1 being 100, and evaluated. Tables 1 and 2 show the evaluation results. The larger the evaluation value, the better the discharge performance.

As can be seen from Tables 1 and 2, as the Na content is increased, the accumulated amount of lead sulfate increases and the discharge capacity tends to decrease. In the lead-acid batteries A2 to A26 having no first rib provided on the negative electrode side, as shown in Table 1, the increase in the accumulated amount of lead sulfate can be prevented by narrowing the inter-electrode gap W and pressing the electrode group. However, in the lead-acid batteries A2 to A26, the effect of preventing the accumulation of lead sulfate is insufficient, and when the Na content is contained at a high concentration of 0.3 mol/L or more, it is difficult to decrease the accumulated amount of lead sulfate more than that of the lead-acid battery A1, to which no Na has been added, even by controlling the inter-electrode gap W. Further, the discharge capacity has been significantly decreased by pressing the electrode group.

In contrast, in the lead-acid batteries B2 to B26 having the first ribs provided on the negative electrode side, as shown in Table 2, the increase in the accumulated amount of lead sulfate is remarkably prevented by narrowing the inter-electrode gap W and pressing the electrode group, and the accumulated amount of lead sulfate can be decreased to nearly half that of the lead-acid battery A1 while Na is contained in the electrolyte solution. Further, a decrease in the discharge capacity due to the pressure of the electrode group has also been prevented.

When the separator after the charge-discharge test was taken out and the presence or absence of permeation marks was visually confirmed, in each of the lead-acid batteries A1, A2, A7, A12, A17, and A22 having no first rib provided on the negative electrode side and Na content was 0.02 mol/L or less, the generation of permeation mark was confirmed. In contrast, in the lead-acid battery provided with the first rib on the negative electrode side, no permeation mark was confirmed except for the lead-acid battery B 1 containing no Na in the electrolyte solution. It is conceivable that this is because the provision of the first rib on the negative electrode side improved the diffusivity of the electrolyte solution near the negative electrode plate.

When the Na content was 0.02 to 0.3 mol/L and the inter-electrode gap W was -0.1 to 0.15 mm (lead-acid batteries B7 to B10, B12 to B15, B17 to B20, and B22 to B25), the accumulated amount of lead sulfate could be held at 95% or lower based on the lead-acid battery A1 while the discharge capacity was maintained at 97% or higher based on the lead-acid battery A1. At this time, no permeation mark was generated. However, from the viewpoint of further preventing the permeation short circuit, the Na content is preferably 0.03 mol/L or more.

Therefore, each of the lead-acid batteries B8-B10, B13-B15, B18-B20, and B23-B25, having an Na content of 0.03 to 0.3 mol/L and an inter-electrode gap W of -0.1 to 0.15 mm, is excellent in discharge performance, is prevented from the lead sulfate accumulation, and is also excellent in the resistance to permeation short circuit.

[Table 1]

| Battery | Rib | Na content [mol/L] | Inter-electrode gap W [mm] | Accumulated amount of lead sulfate | RC capacity |
|---------|-----|--------|--------|--------|--------|
| A1 | | 0 | | 100 | 100 |
| A2 | | 0.02 | | 101 | 100 |
| A3 | | 0.03 | | 105 | 100 |
| A4 | | 0.1 | 0.2 | 120 | 100 |
| A5 | | 0.3 | | 120 | 97 |
| A6 | | 0.35 | | 120 | 94 |
| A7 | | 0.02 | | 96 | 100 |
| A8 | | 0.03 | | 100 | 100 |
| A9 | | 0.1 | 0.15 | 112 | 100 |
| A10 | | 0.3 | | 115 | 98 |
| A11 | | 0.35 | | 114 | 94 |

(continued)

| Battery | Rib | Na content [mol/L] | Inter-electrode gap W [mm] | Accumulated amount of lead sulfate | RC capacity |
|---|---|---|---|---|---|
| A12 | Only second ribs on positive electrode plate side | 0.02 | 0.1 | 91 | 100 |
| A13 | | 0.03 | | 95 | 100 |
| A14 | | 0.1 | | 108 | 100 |
| A15 | | 0.3 | | 110 | 97 |
| A16 | | 0.35 | | 109 | 94 |
| A17 | | 0.02 | 0 | 83 | 95 |
| A18 | | 0.03 | | 86 | 95 |
| A19 | | 0.1 | | 98 | 95 |
| A20 | | 0.3 | | 100 | 93 |
| A21 | | 0.35 | | 100 | 90 |
| A22 | | 0.02 | -0.1 | 86 | 90 |
| A23 | | 0.03 | | 89 | 90 |
| A24 | | 0.1 | | 102 | 90 |
| A25 | | 0.3 | | 105 | 87 |
| A26 | | 0.35 | | 106 | 83 |

[Table 2]

| Battery | Rib | Na content [mol/L] | Inter-electrode gap L [mm] | Accumulated amount of lead sulfate | RC capacity |
|---|---|---|---|---|---|
| B1 | First/second ribs on both positive/negative electrode plate sides | 0 | 0.2 | 90 | 100 |
| B2 | | 0.02 | | 93 | 100 |
| B3 | | 0.03 | | 97 | 100 |
| B4 | | 0.1 | | 110 | 100 |
| B5 | | 0.3 | | 110 | 97 |
| B6 | | 0.35 | | 112 | 95 |
| B7 | | 0.02 | 0.15 | 80 | 100 |
| B8 | | 0.03 | | 83 | 100 |
| B9 | | 0.1 | | 93 | 100 |
| B10 | | 0.3 | | 95 | 98 |
| B11 | | 0.35 | | 95 | 94 |
| B12 | | 0.02 | 0.1 | 72 | 100 |
| B13 | | 0.03 | | 75 | 100 |
| B14 | | 0.1 | | 85 | 100 |
| B15 | | 0.3 | | 85 | 97 |
| B16 | | 0.35 | | 86 | 94 |

(continued)

| Battery | Rib | Na content [mol/L] | Inter-electrode gap L [mm] | Accumulated amount of lead sulfate | RC capacity |
|---------|-----|-----|-----|-----|-----|
| B17 | | 0.02 | | 56 | 100 |
| B18 | | 0.03 | | 58 | 100 |
| B19 | | 0.1 | 0 | 65 | 100 |
| B20 | | 0.3 | | 66 | 98 |
| B21 | | 0.35 | | 66 | 95 |
| B22 | | 0.02 | | 51 | 100 |
| B23 | | 0.03 | | 53 | 100 |
| B24 | | 0.1 | -0.1 | 61 | 100 |
| B25 | | 0.3 | | 60 | 98 |
| B26 | | 0.35 | | 62 | 95 |

INDUSTRIAL APPLICABILITY

The lead-acid battery according to one aspect of the present invention is applicable to a valve regulated lead-acid battery and a flooded-type lead-acid battery, and can be suitably used as a power source for starting an automobile, a motorcycle, or the like.

DESCRIPTION OF REFERENCE SIGNS

1:      lead-acid battery
2:      negative electrode plate
3:      positive electrode plate
4:      separator
5:      positive electrode shelf
6:      negative electrode shelf
7:      positive electrode pole
8:      through-connector
9:      negative electrode pole
11:    electrode group
12:    container
13:    partition
14:    cell chamber
15:    lid
16:    negative electrode terminal
17:    positive electrode terminal
18:    vent plug

**Claims**

1. A lead-acid battery comprising:

an electrode group in which a plurality of positive electrode plates and a plurality of negative electrode plates are stacked via a separator;
a cell chamber that stores the electrode group; and
an electrolyte solution,

wherein
the electrolyte solution contains 0.03 to 0.3 mol/L of Na,
when a first end plate, that is a positive electrode plate of the positive electrode plates or a negative electrode plate of the negative electrode plates located at one end of the electrode group, is disposed close to one of inner walls of the cell chamber, the inner walls facing each other, and a second end plate, that is a positive electrode plate of the positive electrode plates or a negative electrode plate of the negative electrode plates located at an other end of the electrode group, is disposed close to an other of the inner walls, an inter-electrode gap W obtained by the following equation is -0.1 to + 0.15 mm:

$$W = \{(L - d1)/N\} - d2,$$

where
an inter-end-plate distance, that is a maximum separation distance between a surface of the first end plate facing the inner wall and a surface of the second end plate facing the inner wall, is L,
a total of thicknesses of the positive electrode plates and the negative electrode plates in the electrode group is d1,
the number of inter-electrode gaps that is the number of regions in each of which each of the positive electrode plates and each of the negative electrode plates face in the cell chamber is N, and
a total thickness of one separator interposed between the positive electrode plate and the negative electrode plate is d2, and
the separator includes a first rib on the negative electrode plate side.

2. The lead-acid battery according to claim 1, wherein the separator includes a second rib on the positive electrode plate side.

3. The lead-acid battery according to claim 1 or 2, wherein the separator has a bag shape.

4. The lead-acid battery according to claim 3, wherein the separator stores the negative electrode plate.

5. The lead-acid battery according to claim 3, wherein the separator stores the positive electrode plate.

6. The lead-acid battery according to any one of claims 1 to 5, wherein
the negative electrode plate includes a negative electrode material,
the negative electrode material contains conductive carbon particles,
the carbon particles include first carbon particles having a particle size of less than 32 $\mu$m, and
the first carbon particles include second carbon particles having a particle size smaller than an average pore size of the separator.

7. The lead-acid battery according to claim 6, wherein a content of the first carbon particles in the negative electrode material is 0.2% by mass or more and 2% by mass or less.

Fig. 1

**INTERNATIONAL SEARCH REPORT**

International application No.

PCT/JP2018/037301

### A.    CLASSIFICATION OF SUBJECT MATTER
Int. Cl. H01M10/06(2006.01)i, H01M2/18(2006.01)i, H01M4/62(2006.01)i, H01M10/08(2006.01)i, H01M10/12(2006.01)i

According to International Patent Classification (IPC) or to both national classification and IPC

### B.    FIELDS SEARCHED

Minimum documentation searched (classification system followed by classification symbols)
Int. Cl. H01M10/06, H01M2/18, H01M4/62, H01M10/08, H01M10/12

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | JP 8-264202 A (JAPAN STORAGE BATTERY CO., LTD.) 11 October 1996 (Family: none) | 1-7 |
| A | JP 2010-507902 A (AXION POWER INTERNATIONAL, INC.) 11 March 2010, & US 2010/0040950 A1 & WO 2008/051896 A1 & EP 2076912 A1 & KR 10-2009-0071633 A & CN 101563741 B | 1-7 |
| A | JP 2016-103484 A (GS YUASA INTERNATIONAL LTD.) 02 June 2016, & US 2013/0320758 A1 & WO 2012/120999 A1 & CN 103283080 A | 1-7 |
| A | JP 2014-238983 A (GS YUASA INTERNATIONAL LTD.) 18 December 2014, & US 2014/0363724 A1 & EP 2811546 A2 | 1-7 |

☒    Further documents are listed in the continuation of Box C.        ☐    See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22.11.2018 | 04.12.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/037301 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2016-58238 A (GS YUASA INTERNATIONAL LTD.) 21 April 2016 (Family: none) | 1-7 |
| A | JP 2003-92099 A (SHIN-KOBE ELECTRIC MACHINERY CO., LTD.) 28 March 2003 (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014097522 A

- JP 2000340252 A